# EUROPEAN PATENT SPECIFICATION

(11) **EP 4 620 625 B1**
(45) Date of publication and mention of the grant of the patent: **01.07.2026**
(21) Application number: 24165720.4
(22) Date of filing: 23.03.2024
(51) Int. Cl.: B25J 5/00

(54) **GRAVITY INDEPENDENT MULTI-ROBOT SYSTEM**
SCHWERKRAFTUNABHÄNGIGES MULTIROBOTERSYSTEM
SYSTÈME MULTI-ROBOT INDÉPENDANT DE LA GRAVITÉ

(43) Date of publication of application: 24.09.2025
(73) Proprietor: Eriksson, David, 79104 Freiburg (DE)
(72) Inventor: Eriksson, David, 79104 Freiburg (DE)

(56) References cited:
- EP-A1- 2 962 962

## Description

### BACKGROUND OF THE INVENTION

A common system that handles multiple robotic vehicles is the warehouse and storage robots. Those robots include a base member with actuators having wheels that, by means of gravity-induced friction between wheels and ground, displaces the base member. The center of gravity of the device must be within supporting points (wheels) of the device.

Gravity dependent devices are however less suitable for object manipulation since an additional carrier member plus a manipulated load must have a total center of gravity that lies within said supporting points. This limits the range of said carrier member. Furthermore, the dependency of gravity prevents the device to be operated upside down, or any orientation or configuration for which the center of gravity is outside the supporting area. In addition, the possibility to locate the base member to any continuum of locations prevents the straightforward implementation of a continuous power supply and thereby prevents a continuous and uninterrupted operation.

A device that relies on gravity for the positioning and movement of multiple devices is described in the EP2962962A1. This system is designed for material handling and storage with a plurality of devices. It comprises two sets of actuators for displacement for each device along two orthogonal directions on a fixed two-dimensional rail grid. The device is rolling strictly above a frame structure thereby have a limited and interrupted (by frame elements) access to the volume below it. There is no solution presented for continuous power supply.

The Patent Application WO2008039570A2 or US8628289B1 describes another device that has additional heavy-duty rollers for stabilizing the device in case of a displaced center of gravity and an induced torque. The heavy-duty rollers also have the function for suspending the device strictly below the carrying two-dimensional grid frame thereby allowing free access to the area below it. There is no solution presented for continuous power supply.

A recent invention is the "Swarm rail" where a robotic vehicle travels in a cartesian grid of orthogonal rails using omnidirectional wheels (Görner, M.; Benedikt, F.; Grimmel, F.; Hulin, T. SwarmRail: A Novel Overhead Robot System for Indoor Transport and Mobile Manipulation. In Proceedings of the 2020 IEEE International Conference on Robotics and Automation (ICRA), Paris, France, 31 May-31 August 2020; pp. 5905-5911.). This device can turn as well as move along two orthogonal directions. The omnidirectional wheels and their friction sub-wheels add complexity thereby reducing robustness and stiffness with respect to previously introduced patents. The friction in omnidirectional wheels makes them less suited for vertical travel against gravity. There is no mechanical mechanism, such as guiding wheels, for ensuring repeatability of the position of the robotic vehicle orthogonal to the main movement direction of the rail. There is no solution presented for continuous power supply.

The cartesian operation of the known devices, for which the velocity has to go to zero when the direction changes 90 degrees, are, however, poorly adapted to the transfer pieces, in arbitrary directions, at high rates. Furthermore, the cartesian formulation is less flexible when it comes to adaptation to existing infrastructures and extending existing systems.

### SUMMARY OF THE INVENTION

The aim of the present invention is to propose a system for the independent movement and positioning of a plurality of devices independent of gravity, and an in particular advantageous configuration which enables the control of three degrees of freedom, position x and y, and rotation phi of each device individually along a common arbitrary two dimensional surface, and which is particularly adapted for the quick and continuous movement over large areas with high spatial resolution, battery free implementation, flexible rail-free support to be mounted horizontally overhead or on the ground, or vertically on walls. No prior art device offers such characteristics.

To this end we describe a system consisting of a supporting structure with a plurality of parallel posts, between which, one or more robotic vehicles can navigate. It is an inverted rail system with circularly curved guide rails that are part of the robotic vehicle body and a guiding support that are part of the posts of the supporting structure. The guide rails and the guiding support ensure that the robotic vehicle can only make rotational movements that, at a given time point, are centered around a given post. The circular guide rails on the robotic vehicle body allows the robotic vehicle to move smoothly without the need to decelerate when changing direction. At least one actuator with gears or friction wheels displaces the robotic vehicle by engaging with traction elements that are fixed to the supporting structure. The circular movement allows electric signals to be conducted to and from the robotic vehicle using traditional slip-rings. Cross-linking elements in the supporting structure allows easy assemble, modification, and disassembling of the supporting structure.

### ADVANTAGES OF THE INVENTION

The robotic vehicle movement is composed of circular trajectories. The circular movement allows the robotic vehicle to have a constant velocity even when the direction changes. This movement-continuity makes it easier to control manipulators that are attached to the robotic vehicle. This in turns allows each robotic vehicle to be operated at high speed and with a fast positional response. The circular movement allows precise movement with a minimal mechanical backlash and therefore high repeatability. The circular movement around a post allows electrical commutation around that post with a particularly low wear commutation due to the arbitrary low velocity of the point of contact. The circular movement allows standardized parts for the supporting structure that enables a large variety of areal coverage.

### DESCRIPTION OF THE DRAWINGS

Fig. 1 is an orthographic, up-side down, view of the robotic vehicle according to an embodiment of the invention.
Fig. 2 is an orthographic, up-side down, view of the robotic vehicle between 4 posts according to three different example embodiments.
Fig. 3 is the schematic definition of the zero-dimensional movement according to an embodiment of the invention.
Fig. 4 is the schematic definition of the one-dimensional movement zone according to an embodiment of the invention.
Fig. 5 is the schematic definition of the two-dimensional movement zone according to an embodiment of the invention.
Fig. 6 are orthographic views of a deformable circular rail according to an embodiment of the invention.
Fig. 7 is a schematic summary of different movement types according to an embodiment of the invention.
Fig. 8 is an orthographic view of an example supporting structure according to an embodiment of the invention.
Fig. 9 is an orthographic view of a fixed cross-linkage element according to an embodiment of the invention.
Fig. 10 is an orthographic view of an adjustable cross-linkage element according to an embodiment of the invention.
Fig. 11 is an orthographic, up-side down, view of the different parts on a post according to different example embodiments of the invention.

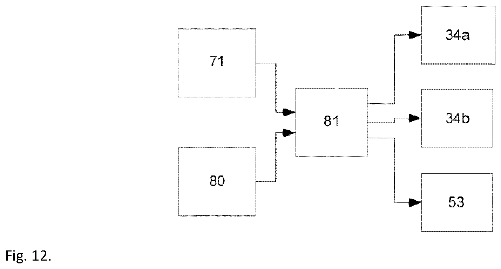

Fig. 12 is a block diagram of a control-algorithm example.

### LIST OF REFERENCE NUMERALS / LETTERS

1 post
1a post
1b post
1c post
2 array support elements
3 supporting distance
4 supporting structure
5 guide-rail apex
6 mounting plate
7 vehicle body
8a fixed cross-linking elements
8b adjustable cross-linking elements
8d fixed cross-linking elements
9a fixed triangular structure
9b flexible triangular structure
9c fixed triangular structure
10 circular movement
11 step-by-step turning
12 equilateral movement trajectories
13 equilateral movement trajectories
14 equilateral movement trajectories
15 equilateral movement trajectories
16 isosceles movement trajectory
20 lateral axis
24 imaginary guide-rail circle
25 contact point
30 guiding support
31 guide rails
31a guide rail
31b guide rail
33 traction element
33c traction element
34a actuator
34b actuator
34c actuator
35a actuator axis
36a driving wheel
36b driving wheel
36c driving wheel
41 equilateral triangle
42 equilateral triangle
51 rail-extending part
52 rail-extending axis
53 rail-extending actuator
55a rail-extending slit
55b eccenter-pin
56 eccenter actuator axis
58a guide-rail extension around post 1a
58b guide-rail extension around post 1b
60a one-dimensional zone
60b translational movement
60c rotational movement
60d two-dimensional zone
60e zero-dimensional zone
61a one-dimensional circular movement
62a one-dimensional slalom movement
71 position sensor
72 sensor seed
75 commutator slip-ring
76 commutator brush
80 movement command
81 micro processor
100 circle of supporting distance
101 triangular hypotenuse
102 triangular base
103 angular difference
150 magnification window
202 parallel structure
203 cross-structure
200a semi-circular hole
200b semi-circular hole
201a semi-circular opening
201b semi-circular opening
204 clamp element
206 clamp indent
205 plier-support structure
207 assembly/disassembly axis
208a post axis
208b post axis
209a element surface
209b element surface
209c offset-line
210a hook structure
210b hook structure
220a oblong hole
220b bolt
221a inner bar structure
221b inner semicircular structure
222a outer semicircular structure
222b outer bar structure
225a post axis
225b post axis
226 inner adjustable element
227 outer adjustable element

### DESCRIPTION THE PREFERRED EMBODIMENTS

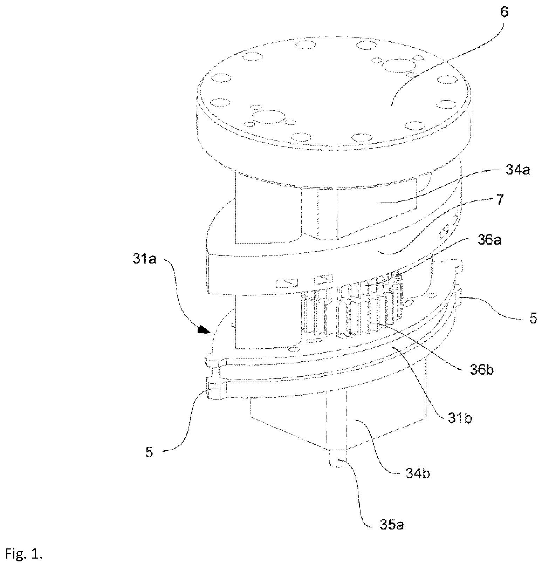

Referring to Fig. 1. For illustration the embodiment is oriented up-side down since the usual working setting will be in the ceiling, where a mounting plate 6 is connected to the robotic vehicle body 7 for mounting manipulation and measurement arms and devices, respectively, that can operate on external objects located below the robotic vehicle. The robotic vehicle is characterized by two integrated curved guide rails 31a and 31b with a rotationally symmetric profile for circular movement, where the guide-rails are attached to the robotic vehicle body 7. When it is not necessary to distinguish between guide rail 31a and 31b I will refer to those as guide rail 31.

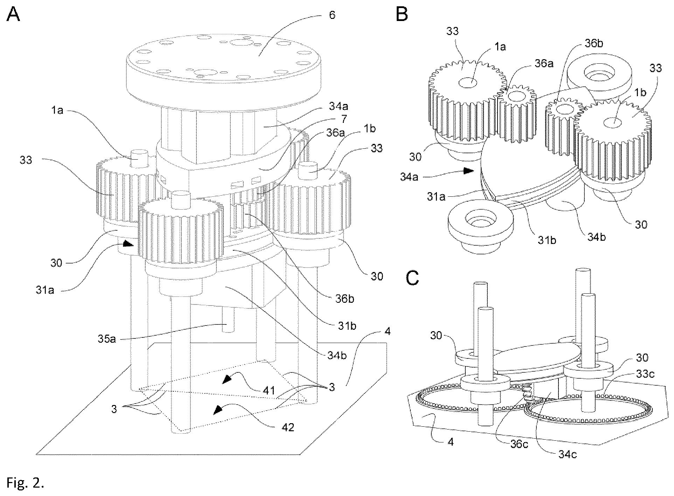

Referring to Fig. 2A the embodiment of the system depicted up-side down is comprised of four fixed posts 1 whose positions are defined by two equilateral triangles 41 and 42 that share one side, where the side lengths of the equilateral triangle will be referred to as a supporting distance 3, where a vehicle can move between two posts of they are separated by the supporting distance 3, where the post positions are determined by a supporting structure 4. The supporting structure 4 may be mounted horizontally with the posts pointing upwards as shown in Fig. 2, horizontally with the posts pointing downwards, vertically with the posts pointing sideways, or any other direction. To support the vehicle in any orientation relative to gravity, each post has at least one guiding support 30 that is unconstrained with respect to rotation around the axis of posts 1, or which has a low friction surface and material with respect to the guide rail 31a and 31b of the robotic vehicle. In the specific embodiment of Fig. 2A the rotationally symmetric profile of the guide rail 31a and 31b is a U-profile and the rotationally symmetric profile of the guiding support 30 on the posts have a rectangular cross-section. Any combination of rotationally symmetric profiles of the guide rail 31 and guiding support 30 are suitable as long as their interaction adequately counteract all induced forces onto of the robotic vehicle relative to the supporting structure except that of the rotation around the length-axis of the nearest post.

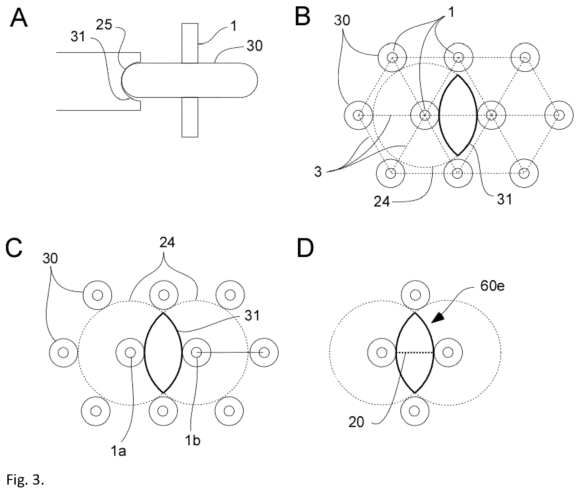

Referring to Fig. 3. Geometrical definition of a zero-dimensional zone. Here we assume that there is at least one contact point 25 between the rotationally symmetric profiles of the guide rail 31 and guiding support 30 as shown in Fig. 3A. Referring to Fig. 3B. Given the following three constraints: the supporting distance 3 between the posts 1, the radius of the guiding support 30 at the contact point 25, and the radius of the imaginary guide rail circle 24 at the contact point 25 of the guide rail 31, it is meaningful to classify the position of the robotic vehicle according to three zones. Referring to Fig. 3C.

The guide rail 31 of the robotic vehicle is defined by the intersection of two imaginary guide rail circles 24 that are centered at two neighboring posts 1a and 1b, respectively, where the sum of the radius of the guiding support 30 and the radius of the guide rail is equal to the supporting distance 3. Referring to Fig. 3D. This intersection between the two imaginary guide rail circles 24 ramifies a zero-dimensional zone 60e, for which a lateral axis 20 coincides with the axis connecting two neighboring posts 1a and 1b.

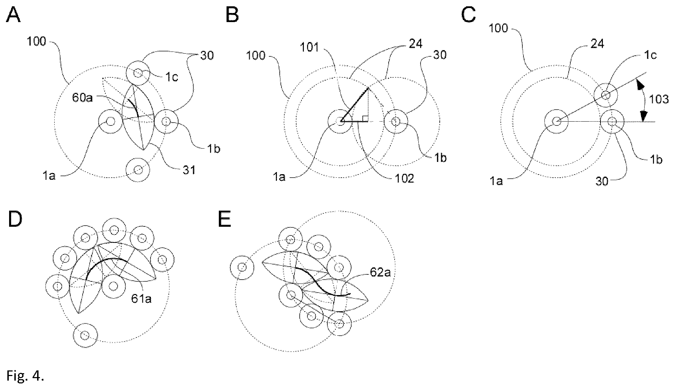

Referring to Fig. 4. In a one-dimensional zone 60a the guide rail 31 tangents three guiding supports 30 as shown in Fig. 4A. The robotic vehicle is constrained to undergo a rotation around an axis parallel to the posts and centered on post 1a. The angular length of the one-dimensional arc is equal to 2*arccos[(cc/2)/(cc-d)]-Δθ. The first term is the angle spanned by the guide rail 31 with respect to the center post 1a as shown in Fig. 4A, where cc/2 is a triangular base 102 of the right-angle triangle with a triangular hypotenuse 101 as shown in Fig. 4B being the radius of the guide rail given as cc-d, where cc is the supporting distance 3 as shown in Fig. 3B, which is a circle of supporting distance 100, d is the diameter of guiding support 30, and Δθ is an angular difference 103 between the two posts 1c and 1b with respect to the center post 1a as shown in Fig. 4C. The one-dimensional zone can be arbitrary long by connecting the movement-arcs from multiple isosceles triangles such as a one-dimensional circling movement 61a as shown in Fig. 4D or one-dimensional slalom movement 62a as shown in Fig. 4E.

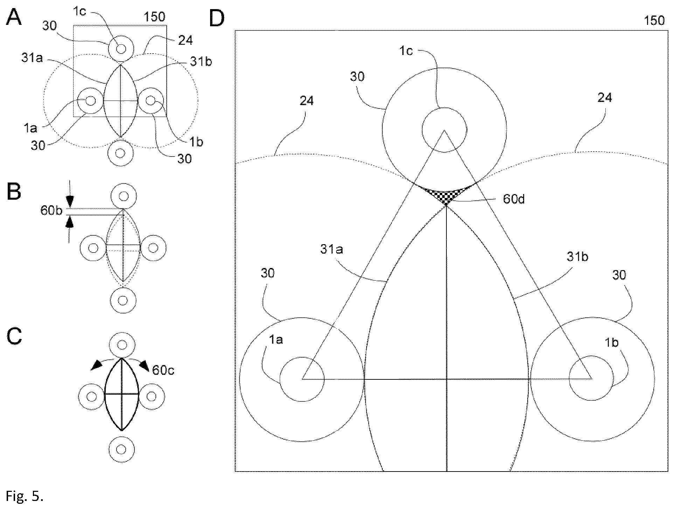

Referring to Fig. 5. In a two-dimensional zone 60d the guide rails 31a and 31b reside between two neighboring guiding supports 30 on posts 1a and 1b and the guide rails 31a and 31b has no tangential contact with the guiding support on post 1c as shown in Fig. 5A. In the two-dimensional zone the robotic vehicle can undertake translational movement 60b as shown in Fig. 5B as well as rotational movement 60c as shown in Fig. 5C. The tip of the robotic vehicle will reside within the two-dimensional zone 60d as shown in the magnification window 150 as shown in Fig. 5D. The two-dimensional zone 60d is defined by imaginary sliding circles 24 of two neighboring posts and the guiding support 30 of post 1c that constitutes the apexes formed by the triangles having the common base spanning between the two neighboring posts 1a and 1b.

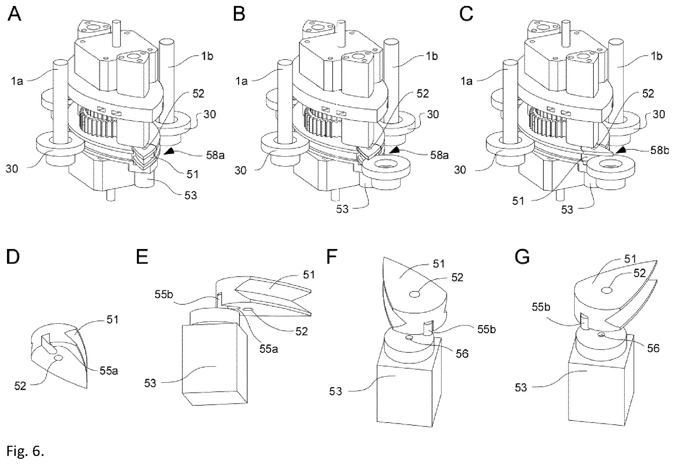

Referring to Fig. 6. The two-dimensional zone 60d can be avoided, resulting in a one-dimensional zone for all positions and orientations of the robotic vehicle, by deforming the geometry of the robotic vehicle using one or more actuators such as to extend the guide rail along a circle centered around post 1a according to an embodiment shown in Fig. 6A and Fig. 6B, or around post 1b according to an embodiment shown in Fig. 6C. This guide rail extension can be achieved by adding a rail-extending part 51 at, at least one of the two, guide-rail-apexes defined by the two meeting points of the guide-rails 31a and 31b on the robotic vehicle. The rail-extending part 51 can be rotated around rail extending axis 52 so as to effectively extend the rail along a circle centered at post 1a or 1b, respectively. A rail-extending actuator 53 rotates the rail-extending part 51 towards post 1a or 1b, illustrated in 58a as shown in Fig. 6B and 58b as shown in Fig. 6C. Alternatively, the rail-extending actuator 53 may drive the rail-extending part 51 indirectly by a system of rods and/or belts, cardan joints and other transmission members. Referring to Figs 6D to 6G the embodiment shows how an indirect transmission can be used to minimize the necessary holding torque on the actuator when the rail-extending part 51, which in this embodiment has a guide-rail with a v-profile, is oriented according to either of two end-points shown in Fig 6B and 6C. For those end points the force on the actuator can be minimized if the rail-extending part 51 has a rail-extending slit 55a as shown in Fig. 6D. Referring to Fig. 6E, 6F, and 6G, the rail-extending actuator 53 has an eccenter-pin 55b that is mounted at a radial distance from an eccenter-actuator axis 56 of the rail-extending actuator 53. The eccenter-pin 55b slides in the rail-extending slit 55a such that the rotating movement of the eccenter-pin 55b can angle the rail-extending part 51 such as to meet the end-points shown in Fig 6B and 6C.

Vehicle-actuator driven movement, by means of one or more traction elements, that, can be embodied as a friction surface or a gear structure, that are substantially immovable fixed to the supporting structure, can be implemented in two complementary ways. First, relating to Fig. 1 and 2A the robotic vehicle has two actuators 34a and 34b that are substantially immovable fixed to the robotic vehicle and their rotating parts are fixed to driving wheels 36a and 36b, which, for example, can be embodied as a friction surface or a gear structure, that induce a net-tangential force on the traction element 33 on the posts 1. Alternatively, the transmission of the motion to the driving wheels may be indirectly effected by a system of rods and/or belts, cardan joints and other transmission members. The driving wheels 36a and 36b can either be radially and axially displaced as is shown in Fig. 1 and 2A, or they can be radially displaced as shown in Fig 2B. The relative speed of driving wheels 36a and 36b determines the direction of movement of the robotic vehicle. For example, if driving wheel 36a turns faster counterclockwise than driving wheel 36b turns clockwise the device drives clockwise to the front right in Fig. 2A and Fig. 2B. The traction element can be a high friction surface, rotationally symmetric around the post axis, or a gear. The movement generation will be different for friction wheels and gears. Gears, or any non-circular geometry, have the advantage that the device can reach 0 velocity in the two-dimensional zone 60d since the gears of the robotic vehicle and posts have physical contact even if they are separated with a small radial displacement. Friction wheels, whilst having the advantage of being quieter, lacks cogs and can therefore not drive in the two-dimensional zone 60d. Instead, while the robotic vehicle is in the zero-dimensional zone 60e the actuators must induce a short rotational acceleration of the robotic vehicle such that the rotational inertia moves the robotic vehicle past the two-dimensional zone and into the one-dimensional zone. If the rail-extending part 51 is used, the two-dimensional zone can be avoided, and gears and friction wheels can be used interchangeably. Finally, gears have a profile that prevents them to rotate around any axis other than the driving axis. Therefore, gears stabilize the robotic vehicle since it prevents rotation around the pitch axis. Thus, it prevents the guide-rail apexes to move in the direction of the length axis of the post. Thus, it can be advantageous to have wide gears, or to have multiple gears along the post. This may also apply to friction wheels for certain types of materials.

Second, if the rail-extending part 51 is used, which has at least one actuator for selecting the direction of movement there is no strict requirement for driving wheel 36a and 36b. Instead, only one additional actuator is necessary for forward and backwards displacement. The additional actuator 34c is substantially immovable fixed to the robotic vehicle. The rotating part of the actuator is fixed to a driving wheel 36c. The driving wheel 36c as shown in Fig. 2C can apply a tangential force on a traction element 33c on the supporting structure 4 as shown in Fig. 2C, thereby displacing the robotic vehicle to the front or back along a curvature controlled by the direction selective rail-extending part 51.

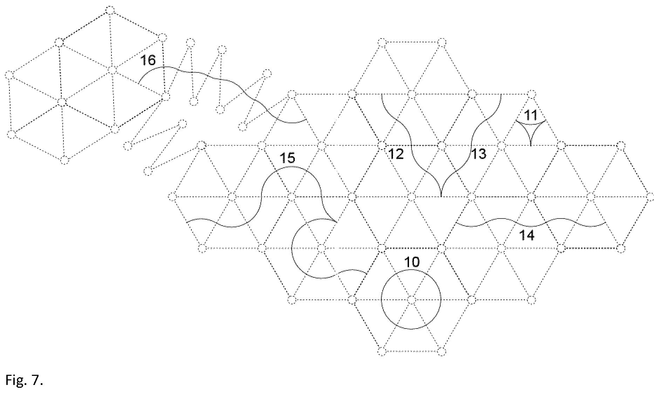

Referring to Fig. 7, the circular movements allow the robotic vehicle to move smoothly along various movement trajectories 12,13,14, and 15 in a two-dimensional plane that is orthogonal to the posts. Prior art devices move along orthogonal rails thereby having to decelerate to 0 velocity for any change in direction of motion. Therefore, the robotic vehicle can adapt to changes in external factors such as avoiding the collision with other moving devices without having to reduce the speed. This movement-continuity makes it easier to control manipulators that are attached to the robotic vehicle. In addition, it allows flexible transfer between triangular grid structures of different orientations as shown by the isosceles movement trajectory 16 in Fig. 7.

In addition, the current invention allows at least two ways to rotate the robotic vehicle. According to the angular geometry the robotic vehicle can engage in a circular movement 10 around a post. This circling operation is allowed as long as the posts form isosceles triangles with their apex being the post in the center of the circling movement. Alternatively, the robotic vehicle can change direction 180 degrees by performing three 60 degrees arcs between 3 neighboring posts within one equilateral triangle in a step-by-step turning 11.

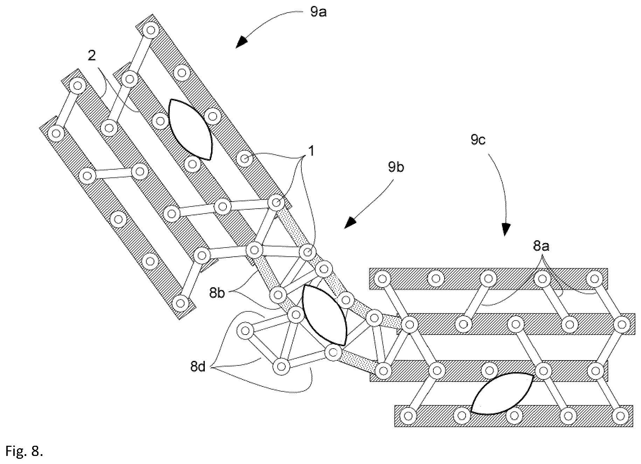

Referring to Fig. 8, an exact spacing between the posts can be ensured by various embodiments of the supporting structure. Array support element 2 with a plurality of integrated posts with a fixed spacing according to the supporting distance 3. Additional fixed spacing cross-linking elements 8a between the array support elements 2 ensure that posts are arranged according to equilateral triangles. Fixed spacing cross-linking elements 8d can also be used to create individual equilateral triangles. Adjustable cross-linking elements 8b are necessary to form isosceles triangles. The length of the base of the isosceles triangle can be modified even when the robot is supported by the three posts of the isosceles triangle being modified, since changing the length of the base will not change the length of the other two sides of the triangle. Those two sides will always be equal to the supporting distance 3. Thus, two triangular structures 9a and 9c can be connected with a flexible triangular structure made of isosceles triangles 9b, for which the robotic vehicle can move between the fixed structures 9a and 9c via a flexible structure 9b at the same time as the fixed structure 9a moves relative to fixed structure 9c. Thus, the robotic vehicle can move while the supporting structure is being modified.

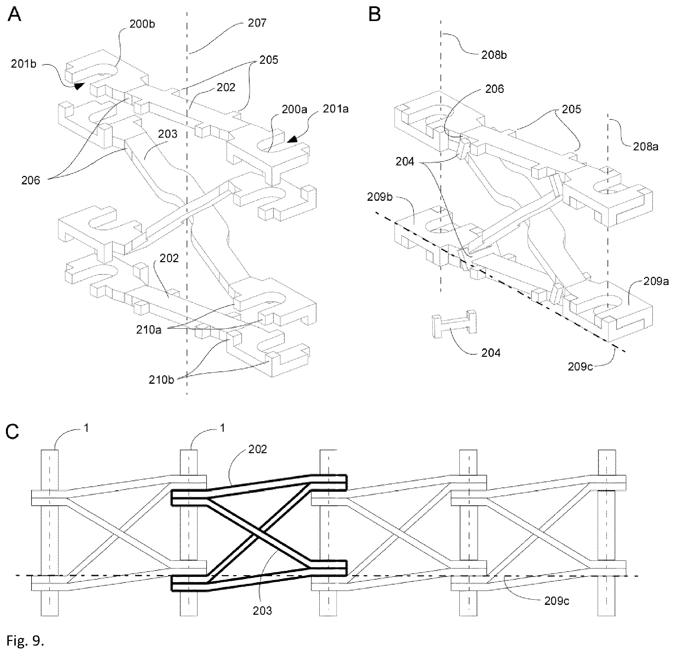

Fixed cross-linking-bars 8a and 8d as shown in Fig. 8 allows two posts to form the side in an equilateral triangle with a fixed length corresponding to the supporting distance 3. Referring to Fig. 9A. To minimize relative rotational and translational post-to-post movements in the plane formed by the two posts, the fixed cross-linking elements should consist of a cross structure 203 as well as parallel structures 202. Semicircular holes 200a and 200b ensures a specific distance between imaginary post axis 208a and 208b and easy assembly and disassembly. Two such opposing semicircular holes, one on the parallel structure 202 and one on the cross structure 203, completes a 360 degrees radial constraint for a post by forming a circular hole. Hook-structures 210a and 210b increases the rigidity of the post constraint. The semicircular openings 201a and 201b should face opposite directions for each part 202 as well as for part 203 to enable a rotational assembly around the assembly/disassembly axis 207 that is parallel to the two posts and lies between the two posts that should be constrained. Rotational assembly and disassembly will give most freedom in the context of a triangular structure.

Referring to Fig. 9B. A H-structured clamp element 204 holds the parallel structure 202 and the cross structure 203 together. Clamp element 204 is held on place with clamp-indents 206 in parallel structure 202 and cross structure 203. Clamp element 204 can be removed or added with the help of pliers through the plier-support structures 205. Two or more of those cross-linking elements can connect three or more posts along a line, without being offset along the post-axis since an element-surface 209b at post 1b is offset relative to an element-surface 209a at post 1a as shown in Fig. 9B and Fig. 9C according to an offset-line 209c.

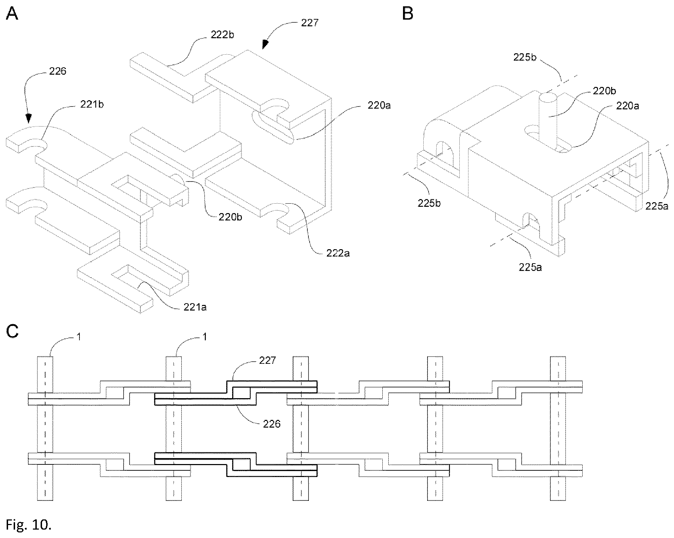

Adjustable cross-linking elements 8b as shown in Fig. 8 allows two posts to form the base in an isosceles triangle, where the length of the base can differ from the supporting distance 3. Referring to Fig. 10A and Fig. 10B. To minimize relative rotational and translational post-to-post movements in the plane formed by the two posts, and to minimize space requirements, an inner adjustable element 226 and an outer adjustable element 227 have a planar structure. Post with post axis 225a will fit into holes that are composed of an outer semicircular structure 222a and an inner bar structure 221a, and post with post axis 225b will fit into holes that are composed of an inner semicircular structure 221b and an outer bar structure 222b. The inner adjustable element 226 and outer adjustable element 227 are attached to each other with a bolt 220b belonging to inner adjustable element 226 through a slit 220a in outer adjustable element 227. The distance between post axis 225a and 225b is adjusted by sliding the inner adjustable element 226 relative to the outer adjustable element 227. Similar to the fixed cross-linking structure two or more of those cross-linking elements can connect three or more posts along a line, without being translated along the post axis as shown in Fig. 10C.

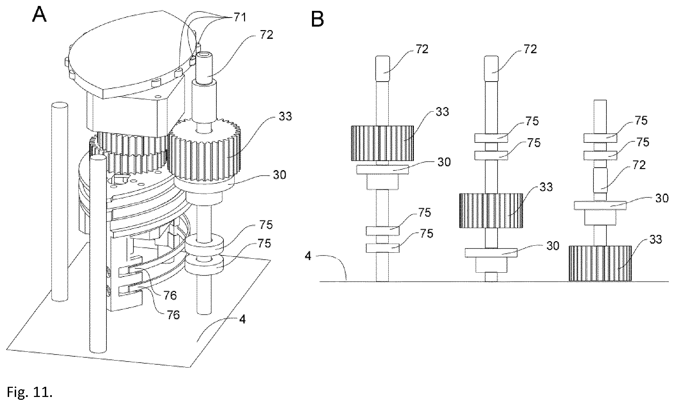

Referring to Fig. 11. The circular operation allows the robotic vehicle to commutate electrical signals (power supply and data signals) with the non-moving posts. To this end each post can have a plurality of commutator slip rings 75, one for each commutator channel. The robotic vehicle will have a corresponding count of electrical commutator brushes 76 such as brushes or graphite blocks, one for each commutator channel. A continuous electrical contact for all commutator channels is guaranteed since the device is always in contact with one post. This commutation eliminates the need for batteries and allows a continuous operation.

The position of the robotic vehicle relative to the posts can be determined by magnetic or optical sensors. For example, each post can have an integrated magnet sensor seed 72 whose field can be detected by a plurality of position sensors 71 that are mounted on the vehicle body 7 along a circular arc whose center lies on the axis that is parallel to the posts and passes through the center of the radius of the guide-rails 31a and 31b. Position sensors can also be used to detect if the position of a post deviates from that expected with an equilateral triangle which means that the robotic vehicle is approaching an isosceles triangle, or the complete lack of a post indicates that the robotic vehicle has reached the end of the reachable area.

The axial order along the post of traction element 33, guiding support 30, and commutator slip-ring 76, and sensor seed 72 is not fixed as shown in Fig. 11C. Other example embodiments are to have a guiding support 30 and the traction element 33 closer to the supporting structure 4 than the slip rings and position seeds since the guiding support 30 and the traction element 33 will experience larger forces than the slip rings and position seeds, which in turn can be closer to the tip of the post as shown in Fig. 11C.

A number of measures can be taken to improve the operation of the robotic vehicle. First, to prevent the robotic vehicle from having a nonzero pitch in the two-dimensional zone the robotic vehicle can have short extensions at the guide-rail apex 5 (Fig. 1) below and above the guide rail at the front and back of the robotic vehicle. Second, the front and rear tip of the guide rail or the guiding support can be made with a soft material, for example rubber, to dampen vibrations as the robotic vehicle engages with a post. Third, in the case of gears, sensors can determine the location of the individual cogs of the gear of the posts in the immediate vicinity such that the actuators can tune their angular cog-position to fit the angular cog-position of the gear on the post of the for a smoother operation. Alternatively, all post-gears can be mounted with a specific predefined gear angle.

The actuators and sensors can be coordinated with an onboard computer, Wi-Fi, Bluetooth or by signals via the slip rings to name a few. Given the reading from the position sensors 71 and given a movement command 80, a microprocessor 81 give control command to the actuators 34a and 34b. If the robotic vehicle is turning and has not yet reached the next post, as detected from the position sensors 71, it will continue the turning and will not execute the next movement command 80. The turning of the robotic vehicle around a post can be achieved by rotating the driving wheel that is closest to the post with a velocity in absolute terms that is a fraction of the velocity in absolute terms of the other driving wheel. Where the velocity is the tangential velocity at the point of contact between driving wheel and the traction element on the post. The fraction is substantially equal to the radius, at the point of contact, of traction wheel 33 divided by the difference being equal to the supporting distance 3 minus the radius, at the point of contact, of the traction wheel 33. Once position sensors 71 indicate that the next post has been reached, the motors will be controlled such as to change turning direction around the new post or to keep turning as indicated by the next movement command. The microprocessor will also control the rail-extending actuator 53 such that the rail-extending part 51 can be directed according to the next movement command.

In the case of multiple robotic vehicles, the coordination between devices can either be according to a local self-organizing principle whereby robotic vehicle sensors maps neighboring robotic vehicles, according to a global coordination by one or multiple off-robotic vehicle master computers, or a combination thereof.

Embodiments of the invention may be employed in very wide variety of applications. One may mention, for example:
Inter-Machine material management such as loading, unloading, and transport manufacturing parts between CNC machines, 3d printers, storage, etc.

Tracking, recording and manipulation of the physiology of multiple freely moving animals for medical industry and research.

## Claims

1. A system allowing the independent movement and positioning of a plurality of robotic vehicles, where the robotic vehicles can have mounted manipulation and measurement arms, where the robotic vehicles are supported by a supporting structure (4) with a plurality of parallel posts (1),
where the system is **characterized in that**
the robotic vehicle has two integrated circular guide rails (31a and 31b) that mechanically supports the robotic vehicle by means of guiding supports (30) that are mounted on the posts (1) of the supporting structure (4), which supporting structure comprises:
- at least one set of three neighboring posts (1) whose center axes, when projected onto the plane that is orthogonal to the posts (1), form the points of an equilateral triangle with the three sides equal to a supporting distance (3) or an isosceles triangle with two sides being equal to the supporting distance (3),
- each post has at least one guiding support (30) with a rotationally symmetric profile around the axis of the post (1), where the guiding support (30) is substantially immovable fixed to the post (1) with a surface having low friction to the guide rail (31a and 31b) on the robotic vehicle, or the guiding support (30) has one rotational degree of freedom around the post axis, where guiding support (30) has a rotationally symmetric profile around the axis of the post (1),
- where there is at least one traction element (33) that is substantially immovable fixed to at last one post (1) or the supporting structure (4),
which plurality of robotic vehicles, each comprises a robotic vehicle body (7) which comprises:
- two guide rails (31a and 31b) that are curved along two circular arcs joined to each other at their end points, where the centers of the two circular arcs are separated by the supporting distance (3), where the profile of each guide rail is rotationally symmetric around the axis that is parallel to the posts (1) and is passing through the centers of respective circular arcs, where the specific combination of rotationally symmetric profiles of the guide rail (31a and 31b) and guiding support (30), and their interaction, should adequately counteract all induced forces onto the robotic vehicle relative to the supporting structure (4) except that of the rotation around the length-axis of the nearest post (1), and to ensure at least one contact point (25) between guide rail (31a and 31b) and the guiding support, where the radius for the guide rail (31a and 31b) at the contact point (25), plus the radius of the guiding support (30) at the contact point (25), is equal to the supporting distance (3).

2. A system according to claim 1, wherein at least one guide-rail-apex (5), where the two guide rails (31a and 31b) meet on the robotic vehicle, is modified and physically decoupled from the rest of the guide rail such that the resulting rail-extending part (51) can be rotated, by means of a rail-extending actuator (53) that is substantially immovably fixed to the robotic vehicle, around an axis parallel (52) to the posts (1) thereby extending either one of the two guide rails (31a or 31b) along its circular curvature.

3. A system according to claim 2, wherein the rail-extending part (51) has a rail-extending slit (55a) in which an eccentric-pin (55b) can slide that is radially displaced from the rotating axis (56) of the rail-extending actuator (53).

4. A system according to claim 1, 2, or 3, wherein the robotic vehicle has at least one actuator (34c), comprising a fixed portion, substantially immovably fixed on the robotic vehicle, and a moving portion having a rotating degree of freedom that is transferred, using any conventional means of transmission, to a driving wheel (36c), where the material and geometry of the driving wheel (36c) has traction with the material and geometry or structure of the traction element (33c) on the supporting structure (4).

5. A system according to claim 1, 2, 3, or 4, wherein the robotic vehicle has at least two actuators (34a and 34b), comprising a fixed portion, substantially immovably fixed on the robotic vehicle, a moving portion having a rotating degree of freedom that is transferred, using any conventional means of transmission, to at least one driving wheel, where the driving wheels (36a and 36b) for the two actuators (34a and 34b) are radially displaced such that either one of the driving wheels (36a and 36b) has contact with the traction element (33) on a given post, where the material and geometry of the driving wheel (36a and 36b) has traction with the material and geometry or structure of the traction element (33).

6. A system according to claim 5 wherein the robotic vehicle, having two independently controllable and radially displaced driving wheels (36a and 36b), where the turning of the robotic vehicle around a post (1) can be achieved by rotating the driving wheel (36a and 36b) that is closest to the post with a velocity in absolute terms that is a fraction of the velocity in absolute terms of the other driving wheel (36a and 36b), where the velocity is the tangential velocity at the interaction point between driving wheel (36a and 36b) and the traction element (33) on the post (1), where the fraction is substantially equal to the radius of traction wheel (33) at the interaction point divided by the difference being equal to the supporting distance (3) minus the radius of the traction wheel (33) at the interaction point.

7. A system according to claim 1, 2, 3, 4, 5, or 6, wherein the robotic vehicle has at least one position sensor (71) arranged along a circular arc whose center lies on the axis that is parallel to the posts (1) and passes through the center of the radius of the guide-rails (31a and 31b) and at least one post (1) has a position sensor seed (72).

8. A system according to claim 1, 2, 3, 4, 5, 6, or 7, wherein the robotic vehicle has at least one commutator brush (76) and at least one post has at least one commutation slip-ring (75).

9. A system according to any one of the previous claims wherein the supporting structure determines the distance between at least one pair of posts using art least two cross linking elements (202 and 203), each having two opposing semicircular openings (201a and 201b), one for each post (1), where the semicircular openings (201a and 201b) of two combined cross-linking elements forms a circular hole for respective post (1).

10. A system according to claim 9 wherein at least one of the two cross-linking elements (202 and 203) of the supporting structure has at least one clamp indent (206) such that the two cross-linking elements (202 and 203) can be held together using a clamp element (204).

11. A system according to claim 10 wherein at least one of the two cross-linking elements (202 and 203) has a plier-support structure (205) for mounting or dismounting the clamp element (204).

12. A system according to claim 9, 10, or 11 wherein the two cross-linking elements (202 and 203) has hook-structures (210a and 210b) that increase the rigidity for at least one of the semicircular openings (201a and 201b).

13. A system according to claim 1, 2, 3, 4, 5, 6, 7, or 8, wherein an adjustable cross linking structure comprises an inner adjustable element (226) and an outer adjustable element (227), where the two structures connects at least one pair of posts (1), A and B, where the outer adjustable element (227) has an outer semi-circular structure (222a) for post A and outer bar structure (222b) for post B, where the inner adjustable element (226) has an inner semi-circular structure (221b) for post B and inner bar structure (221a) for post A.

14. A system according to claim 13, wherein an inner adjustable element (226) and an outer adjustable element (227) fixes the distance between at least one pair of posts (1), by means of a bolt (220b) of the inner adjustable element (226), an oblong hole (220a) of the outer adjustable element (227) in which the bolt (220b) can slide in, and a mutter, that, together with the bolt fixes the inner adjustable element (226) relative to the outer adjustable element (227).

## Patentansprüche

1. System, das die unabhängige Bewegung und Positionierung einer Vielzahl von Roboterfahrzeugen ermöglicht, wobei die Roboterfahrzeuge montierte Manipulations- und Messarme aufweisen können, wobei die Roboterfahrzeuge durch eine Stützstruktur (4) mit einer Vielzahl von parallelen Pfosten (1) gestützt sind,
wobei das System **dadurch gekennzeichnet ist, dass**
das Roboterfahrzeug zwei integrierte kreisförmige Führungsschienen (31a und 31b) aufweist, die das Roboterfahrzeug mittels Führungsstützen (30) mechanisch stützen, die an den Pfosten (1) der Stützstruktur (4) montiert sind, wobei die Stützstruktur Folgendes umfasst:
- zumindest einen Satz von drei benachbarten Pfosten (1), deren Mittelachsen, wenn auf die Ebene projiziert, die orthogonal zu den Pfosten (1) ist, die Punkte eines gleichseitigen Dreiecks mit den drei Seiten gleich einem Stützabstand (3) oder eines gleichschenkligen Dreiecks mit zwei Seiten gleich dem Stützabstand (3) bilden,
- jeder Pfosten zumindest eine Führungsstütze (30) mit einem rotationssymmetrischen Profil um die Achse des Pfostens (1) aufweist, wobei die Führungsstütze (30) im Wesentlichen unbeweglich an dem Pfosten (1) mit einer Oberfläche mit geringer Reibung an der Führungsschiene (31a und 31b) an dem Roboterfahrzeug fixiert ist, oder die Führungsstütze (30) einen Rotationsfreiheitsgrad um die Pfostenachse aufweist, wobei die Führungsstütze (30) ein rotationssymmetrisches Profil um die Achse des Pfostens (1) aufweist,
- wobei es zumindest ein Traktionselement (33) gibt, das im Wesentlichen unbeweglich an zumindest einem Pfosten (1) oder der Stützstruktur (4) fixiert ist,
wobei die Vielzahl von Roboterfahrzeugen jeweils einen Roboterfahrzeugkörper (7) umfasst, der Folgendes umfasst:
- zwei Führungsschienen (31a und 31b), die entlang zweier kreisförmiger Bögen gekrümmt sind, die an ihren Endpunkten miteinander verknüpft sind, wobei die Mitten der zwei kreisförmigen Bögen durch den Stützabstand (3) getrennt sind, wobei das Profil jeder Führungsschiene rotationssymmetrisch um die Achse ist, die parallel zu den Pfosten (1) ist und durch die Mitten von jeweiligen kreisförmigen Bögen verläuft, wobei die spezifische Kombination von rotationssymmetrischen Profilen der Führungsschiene (31a und 31b) und der Führungsstütze (30) und deren Interaktion derart ausgebildet ist, dass sie allen induzierten Kräften auf das Roboterfahrzeug relativ zu der Stützstruktur (4) mit Ausnahme derjenigen der Rotation um die Längsachse des nächsten Pfostens (1) angemessen entgegenwirkt und zumindest einen Kontaktpunkt (25) zwischen Führungsschiene (31a und 31b) und der Führungsstütze sicherstellt, wobei der Radius für die Führungsschiene (31a und 31b) an dem Kontaktpunkt (25) plus dem Radius der Führungsstütze (30) an dem Kontaktpunkt (25) gleich dem Stützabstand (3) ist.

2. System nach Anspruch 1, wobei zumindest eine Führungsschienenspitze (5), an der sich die zwei Führungsschienen (31a und 31b) an dem Roboterfahrzeug treffen, modifiziert und physisch von dem Rest der Führungsschiene entkoppelt ist, sodass der resultierende Schienenerstreckungsteil (51) mittels eines Schienenerstreckungsaktors (53), der im Wesentlichen unbeweglich an dem Roboterfahrzeug fixiert ist, um eine Achse parallel (52) zu den Pfosten (1) rotiert werden kann, wodurch sich eine der zwei Führungsschienen (31a oder 31b) entlang ihrer kreisförmigen Krümmung erstreckt.

3. System nach Anspruch 2, wobei der Schienenerstreckungsteil (51) einen Schienenerstreckungsschlitz (55a) aufweist, in dem ein Exzenterstift (55b) gleiten kann, der radial von der Rotationsachse (56) des Schienenerstreckungsaktors (53) versetzt ist.

4. System nach Anspruch 1, 2 oder 3, wobei das Roboterfahrzeug zumindest einen Aktor (34c) aufweist, umfassend einen fixierten Abschnitt, der im Wesentlichen unbeweglich an dem Roboterfahrzeug fixiert ist, und einen beweglichen Abschnitt mit einem Rotationsfreiheitsgrad, der unter Verwendung eines beliebigen herkömmlichen Übertragungsmittels auf ein Antriebsrad (36c) überführt wird, wobei das Material und die Geometrie des Antriebsrads (36c) Traktion mit dem Material und der Geometrie oder der Struktur des Traktionselements (33c) an der Stützstruktur (4) aufweisen.

5. System nach Anspruch 1, 2, 3 oder 4, wobei das Roboterfahrzeug zumindest zwei Aktoren (34a und 34b) aufweist, umfassend einen fixierten Abschnitt, der im Wesentlichen unbeweglich an dem Roboterfahrzeug fixiert ist, einen beweglichen Abschnitt mit einem Rotationsfreiheitsgrad, der unter Verwendung eines beliebigen herkömmlichen Übertragungsmittels auf zumindest ein Antriebsrad überführt wird, wobei die Antriebsräder (36a und 36b) für die zwei Aktoren (34a und 34b) radial versetzt sind, sodass eines der Antriebsräder (36a und 36b) Kontakt mit dem Traktionselement (33) an einem gegebenen Pfosten aufweist, wobei das Material und die Geometrie des Antriebsrads (36a und 36b) Traktion mit dem Material und der Geometrie oder Struktur des Traktionselements (33) aufweist.

6. System nach Anspruch 5, wobei das Roboterfahrzeug zwei unabhängig steuerbare und radial versetzte Antriebsräder (36a und 36b) aufweist, wobei das Drehen des Roboterfahrzeugs um einen Pfosten (1) durch Rotieren des Antriebsrads (36a und 36b), das dem Pfosten am nächsten ist, mit einer absoluten Geschwindigkeit erreicht werden kann, die ein Bruchteil der absoluten Geschwindigkeit des anderen Antriebsrads (36a und 36b) ist, wobei die Geschwindigkeit die tangentiale Geschwindigkeit an dem Interaktionspunkt zwischen Antriebsrad (36a und 36b) und dem Traktionselement (33) an dem Pfosten (1) ist, wobei der Bruchteil im Wesentlichen gleich dem Radius des Traktionselement (33) an dem Interaktionspunkt geteilt durch die Differenz ist, die gleich dem Stützabstand (3) minus dem Radius des Traktionselement (33) an dem Interaktionspunkt ist.

7. System nach Anspruch 1, 2, 3, 4, 5 oder 6, wobei das Roboterfahrzeug zumindest einen Positionssensor (71) aufweist, der entlang eines kreisförmigen Bogens angeordnet ist, dessen Mitte auf der Achse liegt, die parallel zu den Pfosten (1) ist und durch die Mitte des Radius der Führungsschienen (31a und 31b) verläuft, und zumindest ein Pfosten (1) eine Positionsreferenz (72) aufweist.

8. System nach Anspruch 1, 2, 3, 4, 5, 6 oder 7, wobei das Roboterfahrzeug zumindest eine Kommutatorbürste (76) aufweist und zumindest ein Pfosten zumindest einen Kommutierungsschleifring (75) aufweist.

9. System nach einem der vorhergehenden Ansprüche, wobei die Stützstruktur den Abstand zwischen zumindest einem Paar von Pfosten unter Verwendung von zumindest zwei Vernetzungselementen (202 und 203) bestimmt, die jeweils zwei gegenüberliegende halbkreisförmige Öffnungen (201a und 201b) aufweisen, eine für jeden Pfosten (1), wobei die halbkreisförmigen Öffnungen (201a und 201b) von zwei kombinierten Vernetzungselementen ein kreisförmiges Loch für den jeweiligen Pfosten (1) bilden.

10. System nach Anspruch 9, wobei zumindest eines der zwei Vernetzungselemente (202 und 203) der Stützstruktur zumindest eine Klemmvertiefung (206) aufweist, sodass die zwei Vernetzungselemente (202 und 203) unter Verwendung eines Klemmelements (204) zusammengehalten werden können.

11. System nach Anspruch 10, wobei zumindest eines der zwei Vernetzungselemente (202 und 203) eine Zangenstützstruktur (205) zum Montieren oder Demontieren des Klemmelements (204) aufweist.

12. System nach Anspruch 9, 10 oder 11, wobei die zwei Vernetzungselemente (202 und 203) Hakenstrukturen (210a und 210b) aufweisen, welche die Steifigkeit für zumindest eine der halbkreisförmigen Öffnungen (201a und 201b) erhöhen.

13. System nach Anspruch 1, 2, 3, 4, 5, 6, 7 oder 8, wobei eine einstellbare Vernetzungsstruktur ein inneres einstellbares Element (226) und ein äußeres einstellbares Element (227) umfasst, wobei die zwei Strukturen zumindest ein Paar von Pfosten (1), A und B verbinden, wobei das äußere einstellbare Element (227) eine äußere halbkreisförmige Struktur (222a) für Pfosten A und eine äußere Stabstruktur (222b) für Pfosten B aufweist, wobei das innere einstellbare Element (226) eine innere halbkreisförmige Struktur (221b) für Pfosten B und eine innere Stabstruktur (221a) für Pfosten A aufweist.

14. System nach Anspruch 13, wobei ein inneres einstellbares Element (226) und ein äußeres einstellbares Element (227) den Abstand zwischen zumindest einem Paar von Pfosten (1) mittels eines Bolzens (220b) des inneren einstellbaren Elements (226), eines Langlochs (220a) des äußeren einstellbaren Elements (227), in dem der Bolzen (220b) gleiten kann, und einer Mutter, die zusammen mit dem Bolzen das innere einstellbare Element (226) relativ zu dem äußeren einstellbaren Element (227) fixiert.

## Revendications

1. Système permettant le mouvement et le positionnement indépendants d'une pluralité de véhicules robotisés, où les véhicules robotisés peuvent posséder des bras de manipulation et de mesure montés, où les véhicules robotisés sont supportés par une structure de support (4) avec une pluralité de montants parallèles (1),
où le système est **caractérisé en ce que**
le véhicule robotisé comporte deux rails de guidage circulaires intégrés (31a et 31b) qui supportent mécaniquement le véhicule robotisé au moyen de supports de guidage (30) qui sont montés sur les montants (1) de la structure de support (4), laquelle structure de support comprend :
- au moins un ensemble de trois montants voisins (1) dont les axes centraux, lorsqu'ils sont projetés sur le plan orthogonal aux montants (1), forment les points d'un triangle équilatéral dont les trois côtés sont égaux à une distance de support (3) ou un triangle isocèle dont les deux côtés sont égaux à la distance de support (3),
- chaque montant comporte au moins un support de guidage (30) avec un profil symétrique en rotation autour de l'axe du montant (1), où le support de guidage (30) est fixé sensiblement inamovible au montant (1) avec une surface possédant un faible frottement sur le rail de guidage (31a et 31b) sur le véhicule robotisé, ou le support de guidage (30) possède un degré de liberté en rotation autour de l'axe de montant, où le support de guidage (30) présente un profil symétrique en rotation autour de l'axe du montant (1),
- où au moins un élément de traction (33) fixé sensiblement inamovible à au moins un montant (1) ou à la structure de support (4) existe,
chaque véhicule robotisé de ladite pluralité de véhicules robotisés comprend un corps de véhicule robotisé (7) qui comprend :
- deux rails de guidage (31a et 31b) qui sont incurvés le long de deux arcs de cercle joints l'un à l'autre au niveau de leurs points d'extrémité, où les centres des deux arcs de cercle sont séparés par la distance de support (3), où le profil de chaque rail de guidage est symétrique en rotation autour de l'axe qui est parallèle aux montants (1) et passe par les centres des arcs de cercle respectifs, où la combinaison spécifique des profils symétriques en rotation du rail de guidage (31a et 31b) et du support de guidage (30), et leur interaction, doit contrecarrer de manière adéquate toutes les forces induites sur le véhicule robotisé par rapport à la structure de support (4), à l'exception de celle de la rotation autour de l'axe longitudinal du montant le plus proche (1), et pour assurer au moins un point de contact (25) entre le rail de guidage (31a et 31b) et le support de guidage, où le rayon pour le rail de guidage (31a et 31b) au niveau du point de contact (25), plus le rayon du support de guidage (30) au niveau du point de contact (25), est égal à la distance de support (3).

2. Système selon la revendication 1, au moins un apex (5) de rail de guidage, où les deux rails de guidage (31a et 31b) se rencontrent sur le véhicule robotisé, étant modifié et physiquement découplé du reste du rail de guidage de sorte que la partie d'extension de rail résultante (51) puisse être tournée, au moyen d'un actionneur d'extension de rail (53) qui est fixé de manière sensiblement inamovible au véhicule robotisé, autour d'un axe parallèle (52) aux montants (1) étendant ainsi l'un ou l'autre des deux rails de guidage (31a ou 31b) le long de sa courbure circulaire.

3. Système selon la revendication 2, ladite partie d'extension de rail (51) comportant une fente d'extension de rail (55a) dans laquelle une broche excentrique (55b) peut coulisser qui est déplacée radialement par rapport à l'axe de rotation (56) de l'actionneur d'extension de rail (53).

4. Système selon la revendication 1, 2 ou 3, ledit véhicule robotisé comportant au moins un actionneur (34c), comprenant une partie fixée, fixée de manière sensiblement inamovible sur le véhicule robotisé, et une partie mobile possédant un degré de liberté en rotation qui est transféré, à l'aide de tout moyen de transmission classique, à une roue motrice (36c), où le matériau et la géométrie de la roue motrice (36c) possèdent une traction avec le matériau et la géométrie ou la structure de l'élément de traction (33c) sur la structure de support (4).

5. Système selon la revendication 1, 2, 3 ou 4, ledit véhicule robotisé comportant au moins deux actionneurs (34a et 34b), comprenant une partie fixée, fixée de manière sensiblement inamovible sur le véhicule robotisé, une partie mobile possédant un degré de liberté en rotation qui est transféré, à l'aide de tout moyen de transmission classique, à au moins une roue motrice, où les roues motrices (36a et 36b) pour les deux actionneurs (34a et 34b) sont montées à des distances radiales différentes de sorte que l'une ou l'autre des roues motrices (36a et 36b) soit en contact avec l'élément de traction (33) sur un montant donné, où le matériau et la géométrie de la roue motrice (36a et 36b) possèdent une traction avec le matériau et la géométrie ou la structure de l'élément de traction (33).

6. Système selon la revendication 5, ledit véhicule robotisé, comportant deux roues motrices (36a et 36b) pouvant être commandées indépendamment et montées à des distances radiales différentes, où la rotation du véhicule robotisé autour d'un montant (1) peut être réalisée en faisant tourner la roue motrice (36a et 36b) qui est la plus proche du montant avec une vitesse en termes absolus qui est une fraction de la vitesse en termes absolus de l'autre roue motrice (36a et 36b), où la vitesse est la vitesse tangentielle au niveau du point d'interaction entre la roue motrice (36a et 36b) et l'élément de traction (33) sur le montant (1), où la fraction est sensiblement égale au rayon de l'élément de traction (33) au niveau du point d'interaction divisé par la différence qui est égale à la distance de support (3) moins le rayon de l'élément de traction (33) au niveau du point d'interaction.

7. Système selon la revendication 1, 2, 3, 4, 5 ou 6, ledit véhicule robotisé comportant au moins un capteur de position (71) agencé le long d'un arc de cercle dont le centre se trouve sur l'axe qui est parallèle aux montants (1) et passe par le centre du rayon des rails de guidage (31a et 31b) et au moins un montant (1) comportant un marqueur de capteur de position (72).

8. Système selon la revendication 1, 2, 3, 4, 5, 6 ou 7, ledit véhicule robotisé comportant au moins une brosse de commutateur (76) et au moins un montant comportant au moins une bague collectrice de commutation (75).

9. Système selon l'une quelconque des revendications précédentes, ladite structure de support déterminant la distance entre au moins une paire de montants à l'aide d'au moins deux éléments d'interliaison (202 et 203), chacun possédant deux ouvertures semi-circulaires opposées (201a et 201b), une pour chaque montant (1), où les ouvertures semi-circulaires (201a et 201b) de deux éléments d'interliaison combinés forment un trou circulaire pour le montant respectif (1).

10. Système selon la revendication 9, au moins l'un des deux éléments d'interliaison (202 et 203) de la structure de support comportant au moins une encoche de serrage (206) de sorte que les deux éléments d'interliaison (202 et 203) puissent être maintenus ensemble à l'aide d'un élément de serrage (204).

11. Système selon la revendication 10, au moins l'un des deux éléments d'interliaison (202 et 203) possédant une structure de support de pince (205) pour monter ou démonter l'élément de serrage (204).

12. Système selon la revendication 9, 10 ou 11, lesdits deux éléments d'interliaison (202 et 203) possédant des structures de crochet (210a et 210b) qui augmentent la rigidité pour au moins l'une des ouvertures semi-circulaires (201a et 201b).

13. Système selon la revendication 1, 2, 3, 4, 5, 6, 7 ou 8, une structure d'interliaison réglable comprenant un élément réglable interne (226) et un élément réglable externe (227), où les deux structures relient au moins une paire de montants (1), A et B, où l'élément réglable externe (227) possède une structure semi-circulaire externe (222a) pour le montant A et une structure de barre externe (222b) pour le montant B, où l'élément réglable interne (226) possède une structure semi-circulaire interne (221b) pour le montant B et une structure de barre interne (221a) pour le montant A.

14. Système selon la revendication 13, un élément réglable interne (226) et un élément réglable externe (227) fixant la distance entre au moins une paire de montants (1), au moyen d'un boulon (220b) de l'élément réglable interne (226), un trou oblong (220a) de l'élément réglable externe (227) dans lequel le boulon (220b) peut coulisser, et un écrou, qui, conjointement avec le boulon, fixe l'élément réglable interne (226) par rapport à l'élément réglable externe (227).
